(19) Europäisches Patentamt
European Patent Office
Office européen des brevets

(11) Veröffentlichungsnummer: **0 173 974**
**A2**

(12) # EUROPÄISCHE PATENTANMELDUNG

(21) Anmeldenummer: 85110922.3

(51) Int. Cl.⁴: C 07 F 9/40

(22) Anmeldetag: 30.08.85

(30) Priorität: 05.09.84 DE 3432574

(43) Veröffentlichungstag der Anmeldung: 12.03.86 Patentblatt 86/11

(84) Benannte Vertragsstaaten: BE DE FR GB IT NL

(71) Anmelder: BASF Aktiengesellschaft
Carl-Bosch-Strasse 38
D-6700 Ludwigshafen(DE)

(72) Erfinder: Muench, Volker, Dr.
Luitpoldstrasse 114
D-6700 Ludwigshafen(DE)

(72) Erfinder: Echte, Adolf, Dr.
Leuschnerstrasse 42
D-6700 Ludwigshafen(DE)

(54) **Verfahren zur Herstellung von cyclischen Phosphonsäureestern.**

(57) Herstellung von cyclischen Phosphonsäureestern Ia und Ib

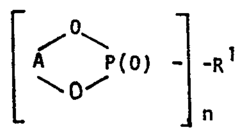

Ia

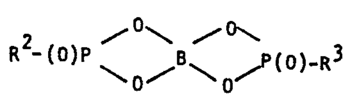

Ib

in welchen die Substituenten und der Index folgende Bedeutung haben

$R^1$ n-wertiger Kohlenwasserstoffrest mit bis zu 20 C-Atomen
A Rest eines zur Ausbildung eines 5- oder 6-gliedrigen cyclischen Esters befähigten Diols mit bis zu 20 C-Atomen k
n 1-4
$R^2$,$R^3$ Kohlenwasserstoffreste mit bis zu 20 C-Atomen
B Rest eines vierwertigen Alkohols mit bis zu 20 C-Atomen, in welchem je zwei Hydroxylgruppen zur Ausbildung von 5- oder 6-gliedrigen cyclischen Estergruppierungen befähigt sind,

./...

EP 0 173 974 A2

Croydon Printing Company Ltd

durch Umsetzung von IIa mit IIIa

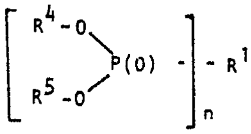

IIa

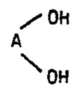

IIIa

bzw. durch Umsetzung von IIb oder IIb und IIc mit IIIb

IIIb

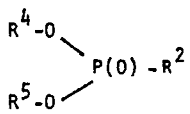

IIb

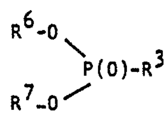

IIc

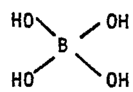

IIIb

($R^4$–$R^7$ = $C_1$–$C_4$–Alkyl) in Gegenwart einer Lewissäure unter fortlaufender Entfernung der hierbei freigesetzten Alkanole.

Verfahren zur Herstellung von cyclischen Phosphonsäureestern

Die vorliegende Erfindung betrifft ein neues Verfahren zur Herstellung von cyclischen Phosphonsäureestern der allgemeinen Formeln Ia und Ib

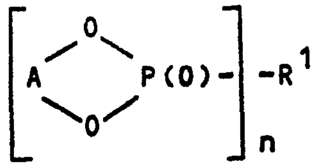

Ia

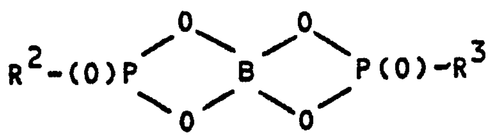

Ib

in welchen die Substituenten und der Index folgende Bedeutung haben:

| | |
|---|---|
| $R^1$ | n-wertiger Kohlenwasserstoffrest mit bis zu 20 C-Atomen |
| A | Rest eines zur Ausbildung eines 5- oder 6-gliedrigen cyclischen Esters befähigten Diols mit bis zu 20 C-Atomen |
| n | 1 - 4 |
| $R^2$, $R^3$ | Kohlenwasserstoffreste mit bis zu 20 C-Atomen |
| B | Rest eines vierwertigen Alkohols mit bis zu 20 C-Atomen, in welchem je zwei Hydroxylgruppen zur Ausbildung von 5- oder 6-gliedrigen cyclischen Estergruppierungen befähigt sind. |

Verbindungen vom Typ Ia und Ib dienen bekanntermaßen als Flammschutzmittel für Kunststoffe und als Komponenten in intumeszierenden Massen, also von Massen, welche beim Erhitzen infolge eines Brandes unter Verkohlen stark aufschäumen und dadurch die Ausbreitung des Brandes hemmen.

Zur Herstellung dieser cyclischen Phosphonsäureester sind mehrere Methoden bekannt geworden, die aber alle mit erheblichen Nachteilen verbunden sind.

So wird bei der Umsetzung von Phosphonsäuredichloriden mit Diolen bzw. Bis-diolen (s. z.B. US-PS 4 174 343) Chlorwasserstoff frei, welcher von dem entstehenden cyclischen Ester nur schwer vollständig abgetrennt werden kann. Die Ester enthalten demnach stets noch etwas HCl, sofern man sie keiner aufwendigen Reinigung unterzieht, wodurch ihre Verwendbarkeit stark beeinträchtigt wird. Außerdem sind die Ausbeuten mit rd. 50 % für technische Zwecke ungenügend. Bindet man den Chlorwasserstoff mit einer Base wie Pyridin, erhöht sich war die Ausbeute auf rd. 75 %, jedoch bleibt das Reinigungsproblem bestehen.

Mi/P

Ähnliche Schwierigkeiten treten bei der Umsetzung von Phosphortrichlorid mit den Diolen bzw. Bis-diolen (s. z.B. GB-PS 2 103 217) auf. Hier erhält man zunächst die Ester der Chlorphosphinsäure, die in einem weiteren Verfahrensschritt mit einem Alkohol $R^1$-OH umgesetzt werden müssen, wonach die entstehende Estergruppierung $R^1-O-P<$ nach Arbuzov in die Phosphonsäuregruppierung $R^1-P(O)<$ umgelagert wird.

Ferner ist es möglich, cyclische Ester der phosphorigen Säure mit Alkylchloriden in die entsprechenden cyclischen Phosphonsäureester zu überführen (US-PS 4 224 063) oder die trimeren cyclischen Anhydride von Phosphonsäuren $R^1-P(O)(OH)_2$ mit Bis-diolen zu den Verbindungen des Typs Ib umzusetzen (GB-PS 2 083 042), jedoch kommen diese Methoden für technische Zwecke nicht in Betracht, da die genannten Ausgangsverbindungen nur schwer zugänglich sind.

Schließlich ist es bekannt, den cyclischen Ester der Methylphosphonsäure mit Neopentylglykol durch Umesterung von Diphenyl-methyl-phosphonat mit diesem Diol in Gegenwart von $MgCl_2$ herzustellen (US-PS 4 276 234), jedoch beträgt die Ausbeute hierbei nur 33 %, und außerdem ist die Aufarbeitung des Veresterungsgemisches auf den reinen cyclischen Ester verfahrenstechnisch sehr aufwendig.

Insgesamt sind die bisher bekannten Methoden zur Herstellung der cyclischen Phosphorsäureester Ia und Ib für technische Zwecke praktisch unbrauchbar, so daß der Erfindung die Aufgabe zugrunde lag, diese Ester auf einfachere und wirtschaftlichere Weise zugänglich zu machen.

Demgemäß wurde ein sehr vorteilhaftes Verfahren zur Herstellung der eingangs definierten cyclischen Phosphonsäureester Ia und Ib gefunden, welches dadurch gekennzeichnet ist, daß man

a) zur Herstellung der Verbindungen Ia einen Dialkylphosphonsäureester der allgemeinen Formel IIa

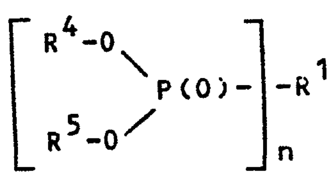

IIa

in welcher $R^4$ und $R^5$ für $C_1$-$C_4$-Alkylreste stehen, mit einem 1,2- oder 1,3-Diol der allgemeinen Formel IIIa

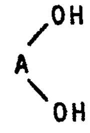

IIIa

und

b) zur Herstellung der Verbindungen Ib einen Dialkylphosphonsäureester der allgemeinen Formel IIb oder, falls $R^2 \neq R^3$, die Ester der allgemeinen Formeln IIb und IIc

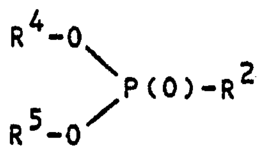

IIb

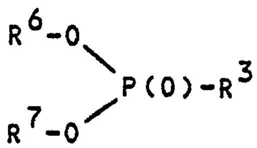

IIc

in welchen $R^4$-$R^7$ für $C_1$-$C_4$-Alkylreste stehen, mit einem vierwertigen Alkohol der allgemeinen Formel IIIb

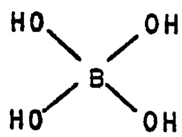

IIIb

in Gegenwart einer Lewissäure unter fortlaufender Entfernung der hierbei freigesetzten Alkanole umsetzt.

Da sich die Erfindung auf ein universell anwendbares Verfahren erstreckt, ist die Art der Reste $R^1$-$R^3$, A und B von untergeordneter Bedeutung und richtet sich lediglich nach den Produkten Ia und Ib, die man herzustellen wünscht.

Die Esterreste $R^4$-$R^7$ in den Ausgangsverbindungen können innerhalb der gegebenen Definition unterschiedlich sein, jedoch wird man es im allgemeinen aus verfahrenstechnischen und wirtschaftlichen Gründen bevorzugen, von einheitlichen Estern wie den Methyl-, Ethyl-, Propyl-, Isopropyl- und Butylestern auszugehen, wobei den Methylestern die größte Bedeutung zukommt, zumal diese in der Regel am billigsten sein dürften.

Die Kohlenwasserstoffreste in den Ausgangsverbindungen IIa können ein- bis vierwertig sein.

Als einwertige Reste seien genannt

- $C_1$-$C_{20}$-Alkylgruppen, darunter insbesondere die Ethylgruppe und vor allem die Methylgruppe
- Cycloalkylgruppen wie der Cyclohexylrest
- Arylgruppen wie der Phenylrest und
- Aralkylgruppen wie die der Benzylrest.

Zweiwertige Reste $R^1$ sind insbesondere der 1,2-Ethylenrest und der 1,4-Phenylenrest, und als dreiwertiger Rest sei der Rest

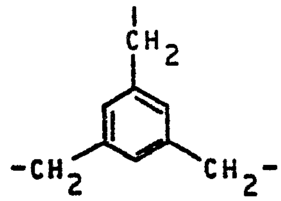

genannt.

Die Verbindungen IIa sind größtenteils bekannt und im übrigen in bekannter Weise gut zugänglich, indem man z.B. das entsprechende Phosphonsäuredichlorid mit einem Alkanol $R^4$-OH umsetzt, oder indem man ein Phosphit

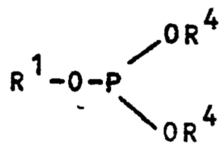

der Arbuzov-Umlagerung zu

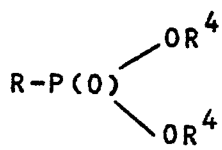

unterwirft.

Als Ausgangsverbindungen IIIa eignen sich alle Diole, die zur Ausbildung 5- oder 6-gliedriger cyclischer Ester befähigt sind, also beispielsweise

- aliphatische Diole, in denen die Hydroxylgruppen in 1,2- oder 1,3-Stellung zueinander stehen, wie Ethylenglycol, 1,2-Propylenglycol, 1,3-Propylenglycol, 1,2-Butylenglycol, 2,3-Butylenglycol, 2-Methyl-1,3-propylenglycol sowie vor allem 2,2-Dimethyl-1,3-propylenglycol (Neopentylglycol);
- cycloaliphatische Diole sowie Cyclohexan-1,2-diol;

- aromatische Diole wie Brenzkatechin , 1,2-, 2,3- und 1,8-Dihydroxynaphthalin und 4,6-Di-tert.butyl-2,3-dihydroxybenzol sowie
- araliphatische Diole wie 2-Methylolphenol.

Als Ausgangsverbindungen IIb und IIc kommen die bereits erwähnten einwertigen Phosphonsäureester IIa in Betracht, wobei man in der Regel keine gemischten Phosphonsäureester Ib ($R^2 \neq R^3$), sondern einheitliche ($R^2 = R^3$, d.h. also nur ausgehend von IIb) herstellt.

Vierwertige Alkohole IIIb sind vor allem das Pentaerythrit sowie daneben das 1,2,4,5-Tetrahydroxybenzol und das 2,5-Dimethylol-1,4-dihydroxybenzol.

Im Hinblick auf die anwendungstechnischen Eigenschaften von Ia und Ib als Flammschutzmitteln oder Zusätzen von intumeszierenden Massen empfiehlt es sich allgemein, von solchen Komponenten IIa, IIb, IIc, IIIa und IIIb auszugehen, die relativ viel Phosphor enthalten, d.h. die keine langkettigen C-Reste tragen. In präparativer Hinsicht kommt es indes auf die Größe der Reste $R^1$-$R^3$, A und B nicht an.

Erfindungsgemäß nimmt man die Umesterung zu ihrer Beschleunigung in Gegenwart einer Lewissäure vor, insbesondere von Halogeniden wie $MgCl_2$, $BF_3$, $BCl_3$, $AlCl_3$, $AlBr_3$, $SiF_4$, $SiCl_4$, $PF_3$, $AsCl_3$, $AsF_5$, $SbCl_3$, $SbF_5$, $SbCl_5$, $CuCl_2$, $CuBr_2$, $ZnCl_2$, $ZnBr_2$, $GaCl_3$, $GaBr_3$, $TiF_4$, $TiCl_4$, $NbF_5$, $CrCl_3$, $MoF_5$, $MoCl_5$, $MnCl_2$, $FeCl_3$, $FeBr_3$, $CoCl_2$, $CoBr_2$, $NiCl_2$ und $NiBr_2$. Besonders bevorzugt wird $MgCl_2$, zumal dieses physiologisch unbedenklich ist und deshalb in den Produkten verbleiben kann, ohne daß es deren Eigenschaften als Flammschutzmittel u.ä. beeinträchtigt.

Die Menge dieser Umesterungskatalysatoren ist nicht kritisch und liegt im allgemeinen zwischen 0,1 und 5 mol-%, vorzugsweise 0,5 und 3 mol-%, bezogen auf die Menge von IIa und IIb.

Vorzugsweise setzt man die Ausgangsstoffe in stöchiometrischem Mengenverhältnis ein, jedoch wirken sich geringe Überschüsse der einen oder der anderen Komponente - etwa bis zu 0,2 Moläquivalenten - normalerweise nicht nachteilig auf die Ausbeuten an den cyclischen Estern Ia und Ib aus.

Im allgemeinen setzt die Umsetzung bei etwa 100°C ein, verläuft ab ungefähr 150°C mit hinreichender Geschwindigkeit und erreicht zwischen 170 und 250°C, häufig indes schon zwischen 170 und 200°C ihr wirtschaftliches Optimum. Das Arbeiten oberhalb 250°C bringt kaum noch Vorteile, und ab

etwa 300°C muß man mit störenden Nebenreaktionen wie Dehydratisierungen rechnen.

Damit die Veresterung in die gewünschte Richtung gelenkt wird, werden die hierbei abgespaltenen Alkanole - meistens Methanol - wie üblich laufend aus dem Reaktionsgemisch entfernt.

Entgegen der Regel, daß sich für Ringschlußreaktionen im allgemeinen das Arbeiten in verdünnter Lösung empfiehlt, braucht beim erfindungsgemäßen Verfahren kein Lösungsmittel mitverwendet zu werden, sofern die Reaktionspartner, wie es meistens zutrifft, eine homogene Schmelze miteinander bilden.

Möchte man trotzdem ein Lösungsmittel verwenden, z.B. zur Herabsetzung der Viskosität des Reaktionsgemisches, eignen sich hierfür hochsiedende Kohlenwasserstoffe und Polyglykolether.

Bei praktisch vollständigem Umsatz, wie daran erkennbar ist, daß kein Alkanol mehr abgespalten wird, erhält man die cyclischen Ester ausweislich gaschromatographischer Analyse in Selektivitäten von meistens über 90 %. Der Großteil des Restes entfällt auf lineare Kondensationsprodukte, und zum geringen Teil bilden sich sonstige Nebenprodukte.

Meistens eignen sich die erhaltenen Reaktionsgemische ohne weiteres für ihren bestimmungsgemäßen Zweck als Flammschutzmittel oder als Komponenten für intumeszierende Massen, da hier weder die Nebenprodukte noch Katalysatoren wie $MgCl_2$ stören.

Andererseits ist es aber auch ohne weiteres möglich, die Verfahrensprodukte Ia und Ib in reiner Form zu gewinnen, indem man sie beispielsweise aus Toluol, Diethylether, Petrolether oder Gemischen solcher Lösungsmittel umkristallisiert. In manchen Fällen kommt auch die Destillation unter vermindertem Druck in Betracht.

Beispiel 1

Herstellung von Methylphosphonsäureneopentylester

1240 g (10 mol) Dimethyl-methylphosphonat und 1040 g (10 mol) Neopentylglycol (rd. 0,5 mol) wurden in Gegenwart von wasserfreiem $MgCl_2$ unter laufender destillativer Entfernung des Methanols 16 h auf 180-190°C erhitzt, wonach sich praktisch die Gesamtmenge des theoretisch zu erwartenden Methanols gebildet hatte.

Das Reaktionsgemisch, welches einen Erstarrungspunkt von 121-123°C aufwies, bildeten nach dem Erkalten eine geruchsfreie, weiße kristalline Substanz, von welcher gemäß GC-Analyse etwa 92 % auf den oben genannten cyclischen Ester entfielen.

Das gleiche Ergebnis wurde mit $ZnCl_2$ anstelle des $MgCl_2$ als Lewissäure erzielt.

Beispiel 2

Herstellung von Bis-(methylphosphonsäure)-pentaerythritester

Diese Verbindung wurde analog Beispiel 1, jedoch mit der doppelten molaren Menge des Dimethyl-methylphosphonates hergestellt; Ausbeute 96 %.

Beispiel 3

Herstellung von Phenylphosphonsäureneopentylester

950 g (5 mol) Benzolphosphonsäuredimethylester, 520 g (5 mol) Neopentylglycol und 10 g $MgCl_2$ wurden unter laufender destillativer Entfernung des Methanols 16 h auf 180-190°C erhitzt, wonach sich praktisch die Gesamtmenge des theoretisch zu erwartenden Methanols gebildet hatte. Das Rohprodukt wird bei 160-161°C und 0,3 mbar destilliert. Es hatte einen Erstarrungspunkt von 105-107°C.

0173974

## Patentanspruch

Verfahren zur Herstellung von cyclischen Phosphonsäureestern der allgemeinen Formeln Ia und Ib

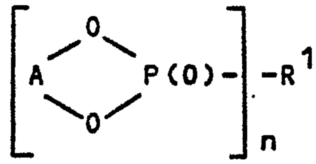

Ia

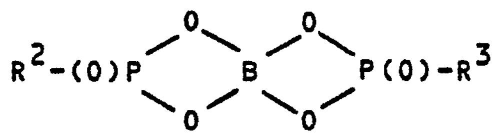

Ib

in welchen die Substituenten und der Index folgende Bedeutung haben:

| | |
|---|---|
| $R^1$ | n-wertiger Kohlenwasserstoffrest mit bis zu 20 C-Atomen |
| A | Rest eines zur Ausbildung eines 5- oder 6-gliedrigen cyclischen Esters befähigten Diols mit bis zu 20 C-Atomen |
| n | 1-4 |
| $R^2$, $R^3$ | Kohlenwasserstoffreste mit bis zu 20 C-Atomen |
| B | Rest eines vierwertigen Alkohols mit bis zu 20 C-Atomen, in welchem je zwei Hydroxylgruppen zur Ausbildung von 5- oder 6-gliedrigen cyclischen Estergruppierungen befähigt sind, |

dadurch gekennzeichnet, daß man

a) zur Herstellung der Verbindungen Ia einen Dialkylphosphonsäureester der allgemeinen Formel IIa

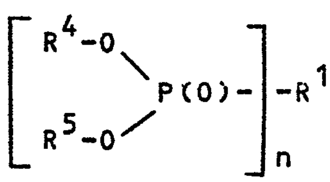

IIa

in welcher $R^4$ und $R^5$ für $C_1$-$C_4$-Alkylreste stehen, mit einem 1,2- oder 1,3-Diol der allgemeinen Formel IIIa

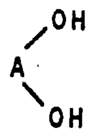

IIIa

und

b) zur Herstellung der Verbindungen Ib einen Dialkylphosphonsäureester der allgemeinen Formel IIb oder, falls $R^2 \neq R^3$, die Ester der allgemeinen Formeln IIb und IIc

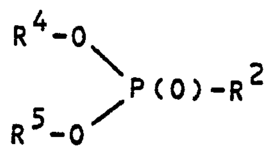

IIb

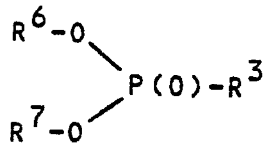

IIc

in welchen $R^4$-$R^7$ für $C_1$-$C_4$-Alkylreste stehen, mit einem vierwertigen Alkohol der allgemeinen Formel IIIb

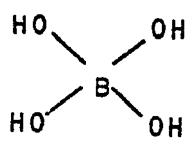

IIIb

in Gegenwart einer Lewissäure unter fortlaufender Entfernung der hierbei freigesetzten Alkanole umsetzt.